# EUROPEAN PATENT SPECIFICATION

(11) **EP 1 533 064 B1**
(45) Date of publication and mention of the grant of the patent: **09.05.2007**
(21) Application number: 04026272.7
(22) Date of filing: 05.11.2004
(51) Int. Cl.: B23D 45/04, B23D 47/02, B27G 19/04

(54) **An electric miter saw**
Elektrische Gehrungssäge
Scie électrique à onglets

(30) Priority: 05.11.2003 CN 200310108424; 23.02.2004 CN 200410016639
(43) Date of publication of application: 25.05.2005
(60) Divisional application: 05023262.8
(73) Proprietor: Hu, Gui Qiang, Yu Yao City Zhe Jiang Province (CN)
(72) Inventor: Hu, Gui Qiang, Yu Yao City Zhe Jiang Province (CN)
(74) Representative: Müller-Boré & Partner Patentanwälte

(56) References cited:
- US-A- 5 129 300
- US-A- 5 241 888
- US-A- 5 579 584
- US-A- 5 862 732

## Description

### TECHNICAL FIELD

This invention relates the technical field of an electric miter saw. An electric miter saw according to the preamble of claim 1 is known from US 5862 732.

### BACKGROUND OF THE INVENTION

Because of the development in the construction material industry, an electric saw in the electric tools is widely used to cut metal tubes, angle irons, channel steels, various kinds of timber and stones. Hence, an electric saw has a large market, and science and technology staffs are developing various types of electric saws. A cutting width limit exists in the traditional and common electric saws. If a workpiece is slightly wider, it cannot be cut by some saws. So, an electric saw with an adjustable cutting width has been developed, such as US Patent No. 5, 054,352, in which a retractable slide rod mechanism is adopted. One end of the slide rod is housed under a cutting table and the other end can be rotatably connected to the lower end of a link arm by a supporting member. The upper portion of the link arm is connected to a fixed cutting member. With the extending and withdrawing movement of the slide rod under the cutting table, a cutting width can be adjusted. Of course, there are advantages of a compact configuration, a small dimension and convenience for use in that saw. There are disadvantages as well, for example, because the localization aperture beneath the cutting table is supported by a slidable extension, it is easy to shake, which can cause an inaccuracy in localization and a decrease of cutting precision, which need to be improved. A slide rod mechanism is also adopted in US Patent No. 5,862,732. One end of the slide bar is secured on the rear surface of the cutting table and on the other end is housed a position limit member. The upper portion of the link arm is connected to a fixed cutting member while the lower portion can be rotatably connected to the supporting member. In the inner aperture of the supporting member are mounted linear ball bearings, by which the supporting member and slide rod can be rotatably connected. Therefore, the disadvantages in the last US patent can be avoided, such as an easy shake, an inaccurate localization and decrease of precision. However, the slide rod secured under the cutting table gives the saw a non-beautiful and a slightly large appearance. Therefore, most of space under the cutting table cannot be utilized fully and the proportion of the waperture machine is affected. And it can cause the reduction of the area of the cutting table that can be utilized efficiently and therefore affects the width of its cutting stroke, which are all needed to be improved. On the other hand, there is no flexible blade guard on traditional electric saws and there exist some hidden troubles of safety. For that reason, an electric saw with a flexible blade guard is developed, for example, the flexible blade guard assembly for an electric saw with China's Patent No. 02266104.2. It includes a fixed guard with one end flexibly hinging to the link arm and a flexible one that is secured and co-axially moved about the co-axes in the lower portion of the fixed guard. A link rod mechanism is connected to the flexible blade guard and the end of the link arm. The character of the link rod mechanism is that the short rod flexibly hinges to the end of the link arm and the other end on the link bar. The other end of the link arm flexibly hinges to the flexible blade guard. In the middle portion of the link rod is formed a track slot, which moves together with the localization pin in the inner side of the fixed blade guard. That represents a concept of design in which is adopted the control of opening and closing of the flexible blade guard by a link rod mechanism. Though it is simple in configuration, low in manufacturing cost and easily implemented, some disadvantages have exposed in the practical application and they cannot be overcome, for example, the requirements of the process and installation of the link bar and slot are very high. If some errors appear during the process or installation, a dead center will be caused and the link rod mechanism will not be controlled flexibly or even be blocked dead, which will easily cause safety accidents during operation. In case those disadvantages are formed, it is very difficult to correct itself by means of adjustment of the installation position. So, a new flexible blade guard needs to be developed for the saw so that those disadvantages can be overcome.

### SUMMARY OF THE INVENTION

The problem to be solved is to provide a safe and reliable electric miter saw of simple configuration

Errors in the process can be eliminated by an appropriate adjustment of the mounting position of a workpiece and the guard can be flexibly opened and closed to avoid phenomena such as dead centers, position blocking and not-in-position so that the safety in use and the convenience in maintenance are improved.

The technical scenario to solve the technical problems above embodying the invention is an electric miter saw consisting of a base, a cutting table, a cutting member and a link arm. The cutting table is mounted on the base. The upper portion of the link arm is connected to the cutting member with the cutting saw rotating driven by an electric motor and the lower portion of the link arm secured on the upper portion of the supporting member by a threaded central bolt. The linear ball bearing is mounted in the inner aperture of the supporting member. The member can be slidably connected to the slide rod by the linear ball bearing. At the outer end of the slide rod is a position limit socket with the characters that the inner end of the slide rod can be secured beneath the cutting table by a discharageable fix mechanism. A flexible blade guard is attached to the cutting member of the saw, which includes a fixed blade guard mounted on the cutting member and a flexible one. The flexible blade guard is joined comparatively to the fixed one from the bottom and is rotatably connected to the fixed one. Hence, a gear is housed on the rotatable connection position of the flexible blade guard and a rotatable tension rod is connected and fixed at the side portion of the fixed blade guard. On the upper end portion of the tension rod is a rack, which engages the gear. A ringent slot is made at the lower portion of the bar for connection support of the location pin.

Useful for understanding the invention is that the discharageable securing configuration mentioned above forms a localization cavity at one side beneath the cutting table, threaded apertures are opened on the sidewall of the cavity and a localization slot is opened at the inserting end for the slide rod insertion. The slide rod can be screwed in by a bolt after it is inserted into the location cavity so that the inner end of the bolt can be forced into the localization slot at the inserting end of the slide rod, securing the slide rod beneath the cutting table. The mechanism is easy to be assembled, has steady configuration and has convenience of using.

It is also useful for understanding the invention that the discharageable securing configuration opens a localization aperture for the side panel behind the cutting table for the slide rod's insertion. Near the inner side of the localization aperture are formed many toggle plates that support the sliding rod. With a raming panel, the plates are connected to and fixed at the bottom of the cutting table with raming screws, securing the slide rod under the cutting table. The device has a good fastness, a simple configuration and convenience of using.

What it is more useful for understanding the invention is that there is a position limit pin at the side surface of the front terminal of the slide rod. The pin supports the localization aperture in the side panel to prevent the slide rod from being accidently pulled out of the cutting table . Similarly, there is a position limit socket at the rear end of the slide rod to prevent the supporting member from moving out of the slide rod during the slide.

It is also useful for understanding the invention that there are 2 slide rods that are mounted left and right symmetrically under the cutting table with its central line as a benchmark. Accordingly, 2 apertures are also opened left and right in the cutting table to improve hardness and stability.

A beneficial improvement of the invention is that that rack is an arc one that can engage the gear and provides the flexible blade guard with more flexibility of rotation.

Another beneficial improvement is that the flexible blade guard above is co-axialy connected to the fixed one so that it is convenient to be localized and mounted for production. The prominent improvement is that the teeth on the most upper portion of the rack is formed to the blocking teeth to support the gear for position limit. So, the rack can block itself at the ultimate position, will not fall off to affect cutting operations and the safety in use will be improved.

The perfect improvement is that the bottom of the ringent slot is arc-shaped so that the flexible blade guard can rotate more flexibly.

Also, the flexible blade guard is connected at the inner side of the connection portion to the gear and connected and secured to the fixing panel by an embedding member, a loosing-proof nut and spacer. The fixing panel is secured on the fixing guard by a securing member. It is very convenient for the flexible blade guard to be assembled and very helpful for the adjustment of engaging position between the rack and gear so that the error in the process and mounting of a part can be eliminated.

What can be also improved is that there should be a concavo-convex location mechanism between the flexible blade guard's connecting position and the interface of the gear. The mechanism is of a ring segment that is distributed circularly. It can keep the gear and flexible blade guard rotating concurrently to avoid skid. The mechanism is simple in configuration and easy to be assembled for production.

What is perfect is that there is a reposition spring between the gear and the fixing panel, which provide the flexible blade guard with reposition elasticity so that the guard can be opened and closed agilely and be convenient to a user.

Finally, the flexible blade guard above can be a transparent flexible blade guard because it is very convenient for a user to watch.

Compared with the current technology, that invention's advantages are:

First, the interspace between the cutting table and the base can be efficiently utilized so that the slide rod can extend under the surface and its exposed part becomes shorten a lot in the same stroke because the slide rod is secured under the surface.Therefore, the supporting member will slide more safely and smoothly on the slide rod. Secondly, the slide rod is needed only to be housed directly on the localization cavity that is preserved beneath the cutting table and processed and fixed directly with a forcing bolt, or secured by the location aperture and raming panel. The mounting is very simple and steady. Besides, the requirement of the current miter saw to the cutting range is getting higher and higher. In the miter saws of the same dimension, in order to increase the cutting range, a manufacturer will choose the increase of the stroke (to increase the length of the slide rod) to meet a consumer's need. Hence, the apparent dimension of a miter saw is getting larger and larger so that the propitiation of the whole saw and external packing dimension are affected. If the slide rod is mounted beneath the cutting table, the huge space beneath the surface can be utilized to maximum degree. If one end of the slide rod is extended into the cutting table by appropriate length, the appropriation of the whole saw can be maintained and the external packing dimension controlled. Also, the cutting stroke will be increased and the whole saw will have a beautiful appearance, a simple configuration, which will bring an easy manufacture and a lower cost. Because of the sliding and supporting connection of the supporting member and slide rod, the connection will become compact, it is very convenient to be operated and the operation stability of the saw will be increased. When the saw is not in use and in storage instead, loosen the jaming screw, move the exposed portion of the slide rod into the table and then secure it. In that way, the space for storage and packing can be reduced and it is convenient to be stored and packed. The design of the saw's whole configuration is reasonable and simple. It is convenient to be used and brings about a good effect. The mechanism to control the opening and closing of the flexible blade guard is a gear-driven one consisting of a tension rod, a rack and gear. The configuration design is reasonable and simple, and reduces the precision of process, production and installation of every part. Even if there exists some errors, they can be eliminated with the adjustment of the first engaging position of the rack and gear. It is easy for the flexible blade guard to be in position. There exists no dead center in the design of configuration and no position block. The rotation is very flexible. It is very convenient to be maintained. With the adjustment of the teeth ratio between the rack and gear, the opening speed of the flexible blade guard can be adjusted so that the mechanism property of the miter saw will be increased.

### BRIEF DESCRIPTION OF THE DRAWINGS:

Figure 1: a perspective view of an electric miter saw embodying the invention.
Figure 2: a cutaway view of a preferred electric miter saw's configuration (primarily cutaway view of the cutting width adjustment mechanism)
Figure 3: a partially magnified bottom cutaway view of a preferred electric miter saw's configuration
Figure 4: a cutaway view of the configuration of a preferred electric miter saw (primarily cutaway view of the cutting width adjustment mechanism)
Figure 5: a sketch map of a preferred electric miter saw's flexible blade guard being used (the status of the cutting member being raised)
Figure 6: a sketch map of the configuration of a preferred electric miter saw's flexible blade guard (the status of a cutting member being raised)
Figure 7: a sketch map of a preferred electric miter saw's flexible blade guard be used (the status of the cutting member's being in the middle position)
Figure 8: a sketch map of the configuration of a preferred electric miter saw's flexible blade guard (the status of the cutting member's being in the middle position)
Figure 9: a sketch map of a preferred electric miter saw's flexible blade guard being used (the status of the cutting member's being lowered)
Figure 10: a sketch map of the configuration of a preferred electric miter saw's flexible blade guard (the status of the cutting member's being lowered)
Figure 11: a side view of the flexible blade guard's components
Figure 12: a cutaway view of the flexible blade guard's components' configuration
Figure 13: an exploded perspective view of a preferred electric miter saw embodying the invention
Figure 14: a partially magnified view of figure 13

### DESCRIPTION OF THE PREFERRED EMBODIMENT

Referring to the drawings, a detailed description of the invention goes as follows:

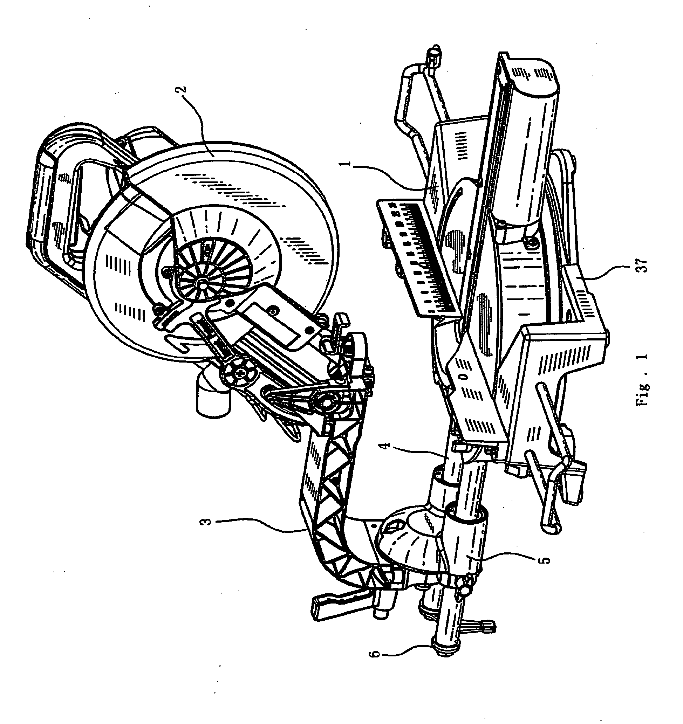

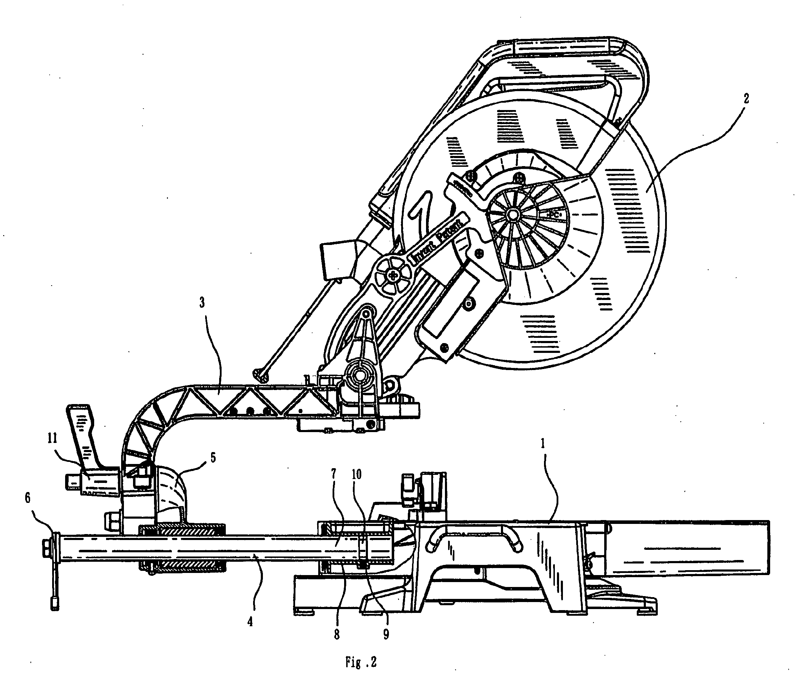

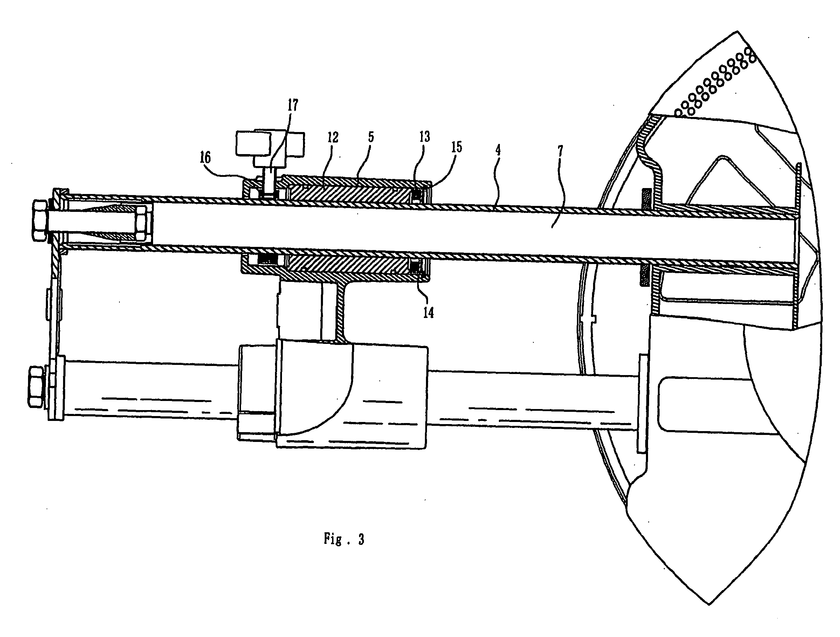

As shown in figures 1,2,3 and 13, a preferred embodiment of an electric miter saw includes components such as a base 37, a cutting table 1, a cutting member 2 and a link arm 3. The cutting table1 is mounted on the base 37. At one side beneath the cutting table 1 are formed localization cavities 7 with the member of 2 which are housed left and right symmetrically beneath the table with the central line as a benchmark. There are threaded apertures on walls 8 of cavities. And there is a localization slot 10 at the inserting end for a slide rod's 4 insertion of the cavity. The localization slot 10 is usually a ring one for the sake of use. After the slide rod 4 finishes inserting into the localization cavities 7, extend a threaded bolt 9 into the threaded aperture for its inner end to be pushed into the localization slot 10 at the inserting end and secure the slide rod beneath the cutting table 1. The outer end of the slide rod 4 is connected and secured to a position limit socket 6 by a stud. There is also a supporting member 5, on which 2 inner apertures are drilled correspondently. Linear ball bearings 12 are mounted in the inner aperture of the supporting member by transitional support. Through the linear ball bearings 12, the member is slidably connected to the slide rod 4. The front end of the linear ball bearing is attached to an asphalt felt 13 and secured with dust-proof cover 14 and a spring 15 so that the connection between the supporting member 5 and the slide rod 4 is neither loose nor tight and can slide. At the rear end of the inner aperture of the supporting member is there a locking sheath 16 which is housed on the slide rod 4. A latch bolt 17 is screw thread connected to the locking sheath 16 by the ringent aperture in the supporting member. Once the supporting member 5 is slided to a certain position of the slide rod and stop, the operator can screw down the latch bolt 17 to secure the supporting member 5 on the slide rod 4. So, the cutting width of the miter saw can be controlled. The upper portion of the link arm is connected the cutting member 2 with the cutting saw blade rotatably driven by an electric motor. The cutting member can be manually lowered for cutting or raised for stopping cutting. The lower portion of the link arm 3 is connected and secured on the upper portion of the supporting member 5 by a threaded central bolt 11 to force the link arm 3 to rotate appropriately as required. To loosen the threaded central bolt 11, the link arm 3 can be turned to a required angle to meet the need of a workpiece cutting, and then screw down the threaded central bolt 11 to secure the link arm 3.

In the example embodying the invention, the operation concept of the dischargeable fixing configuration between that slide rod and the cutting table is that: When the electric miter saw is needed to cut a workpiece, an operator will insert the inserting end of the slide rod 4 into the localization cavity 7 beneath the cutting table, then screw the threaded bolt 9 into the screw in the wall of the cavity 8 and screw dwon the bolt 9 to force the inner end of the bolt into the localization slot 10 at the inserting end of the slide rod. Secure the slide rod 4 beneath the cutting table 1 tightly, then loosen the threaded central bolt 11 as required, adjust the connecting angle between the link arm 3 and the cutting table 1 for the bevel angle of the cutting member 2 to meet our operating requirement, and then screw down the threaded central bolt 11. Having been operated above, the electric miter saw will be in the working status as required, and the operator can manually lower the cutting member for cutting and raise it for stopping cutting. He can also move freely the cutting member on the slide rod to finish cutting a very wide workpiece. When an operator does not use the saw and store it, he can loosen the bolt 9, move the slide rod 4 out of the cutting table to reduce the space for storage or packing.

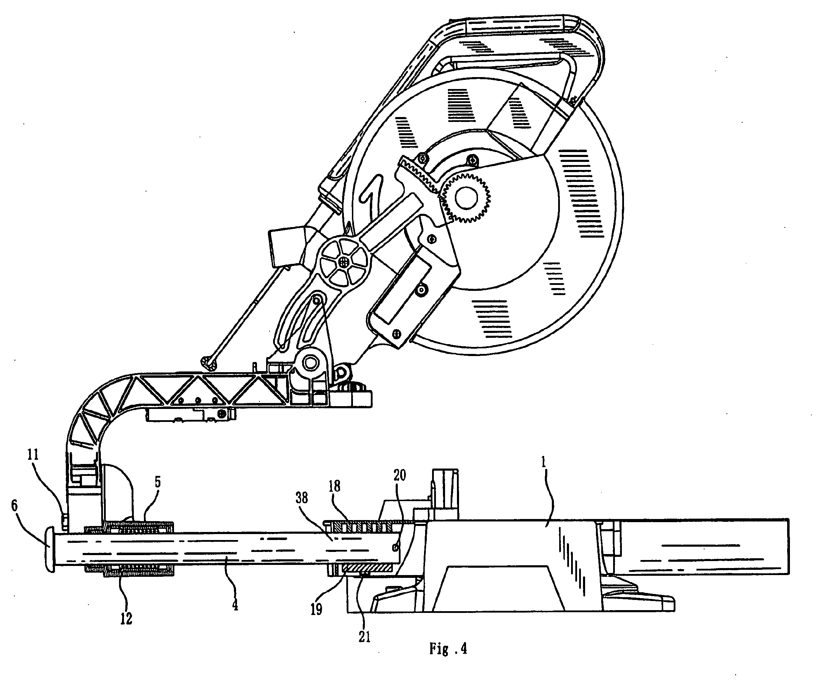

Also in the example embodying the invention, as shown in figures 1, 4 and 13, the dischargeable fixing configuration between another slide rod and the cutting table is that: there are localization apertures 38 for the slide rod's expansion on the side panel behind the cutting table. There are usually two such apertures, which are drilled left and right symmetrically in the two sides of the central line of the cutting table, and there are numbers of toggle plates 18 near the inner side of the localization aperture for supporting the slide rod 4. The toggle plates 18 are in the shape of arc for improvement of the localization securing intension. Accordantly, twoslide rods 4 of the same size are inserted into the localization apertures for localization. The slide rods can be adjusted according to the width of the workpiece being cut for the length of the slide rod that is exposed out of the cutting table to meet our cutting requirement. Space is preserved in the rear portion of the bottom of the cutting table 1 to support a raming panel's 19 localization. The number of the raming threaded bolts 21 are usually three. They are symmetrically housed at the two sides of the two slide rods to improve the location's fastness. When the raming panel 19 rams the two slide rods, use raming threaded bolt 21 for localization and securing so that the slide rods can be localized in our required position without any further movement. There are two inner aptertures that support each on the lower portion of the supporting member 5, which can be covered at the ends of the two slide rods exposed out of the cutting table. The linear ball bearing 12 is mounted at the front side of the member's inner aperture by the transitional support. The supporting member is slidably connected to the slide rod via the linear ball bearing 12. There is a locking sheath in the rear of the supporting member's inner aperture. The locking sheath is housed on the slide rod. The locking thread bolt is screwingconnected to the locking sheath via the ringent aperture in the supporting member. Once the slide rod slides to a certain position and stops, an operator can screw down the locking threaded bolt for the supporting member to be secured on the slide rod to control the cutting width of the miter saw. At the front end of the inner aperture are attached asphalt felts which are secured by dust-proof covers and the springs to have a neither-loose-nor-tight and slidable connection between the supporting member and the slide rod. The configuration is similar with the one in the example above and no numbers are needed to be marked in the drawings. The upper portion of the supporting member 5 is connected to the lower end of the link arm by the threaded central bolt 11 for the link arm 3 to rotate appropriately as required, for example, to loosen the threaded central bolt 11 to allow the link arm 3 to turn to an angle to meet the need of cutting a workpiece, and then screw down the threaded central bolt 11 to secure the link arm 3. The upper end of the link arm 3 is connected to cutting member 2 by a shaft and bearing for the cutting member to be manually lowered for cutting and raised for stopping cutting. There is a position limit pin 20 housed at the side surface of the slide rod's front end that supports the localization aperture to prevent the slide rod from being pulled out accidentally. Similarly, there is position limit socket 6 at the rear end of the slide rod to prevent the supporting member from falling off the bar in the slide.

The operation principle of the fixed configuration embodying this invention is that: When he needs the electric miter saw to cut a workpiece, he can adjust the length that the slide rod 4 extends out of the cutting table as he needs. Generally, loosen the raming threaded bolt 21 first, adjust the length that the slide rod extends out of the cutting table so that the cutting width of the electric miter saw can meet our requirement, ram and screw down the raming threaded bolt 21 to localize and secure the slide rod 4, and then loosen the threaded central bolt 11, adjust the connecting angle between the link arm 3 and the cutting table 1 for the bevel angle of the cutting member 2 to meet our operation requirement and then screw down the threaded central bolt 11. In that way, the electric miter saw will in the status needed by our operation. With a hand holding the cutting member, an operator can lower the cutting member for cutting or raise it for stopping cutting, and he can freely move the member and have a cutting operation on the slide rod 4 to finish cutting a very wide workpart. When the electric miter saw is not used and needed to be stored, the threaded bolt 21 can be loosened, and the exposed part of the slide rod can be moved into the cutting table and secured to reduce the room for storage and packing.

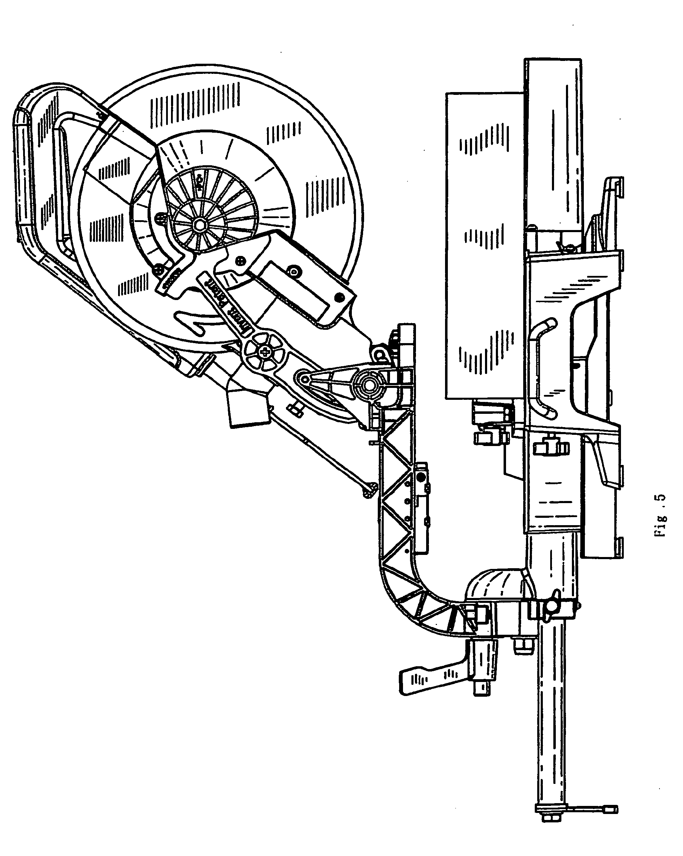

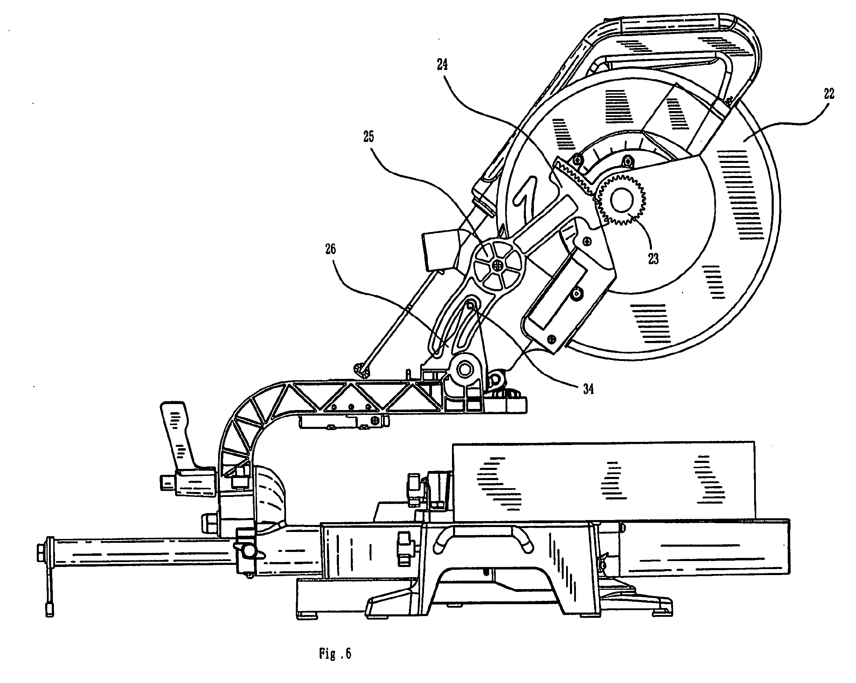

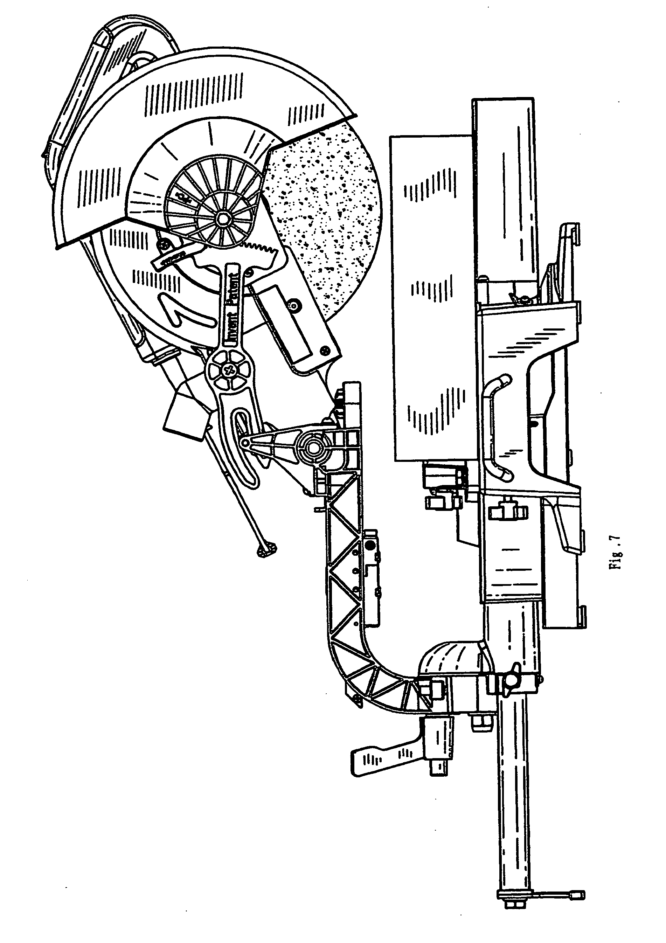

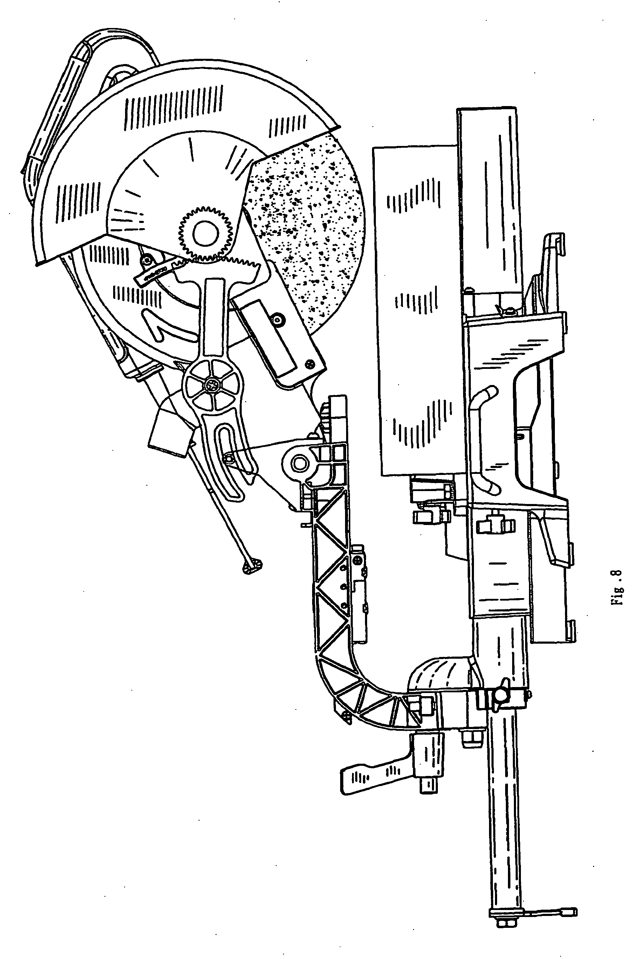

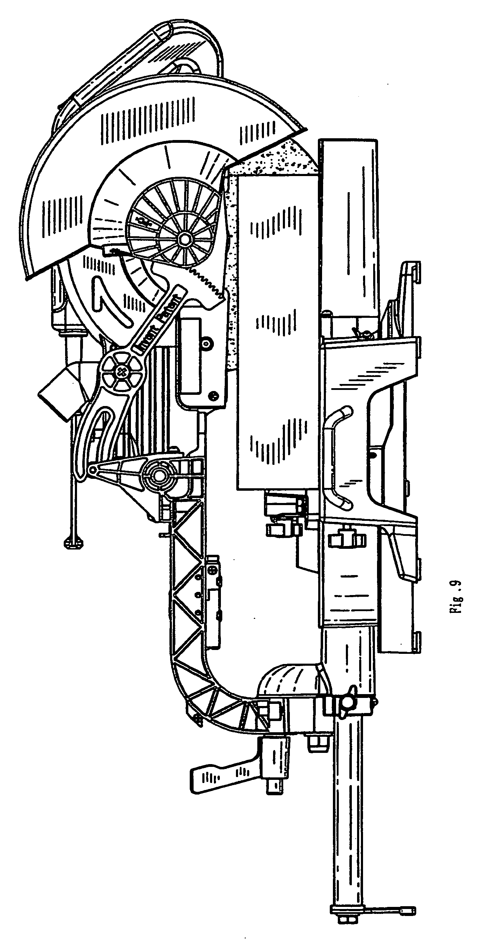

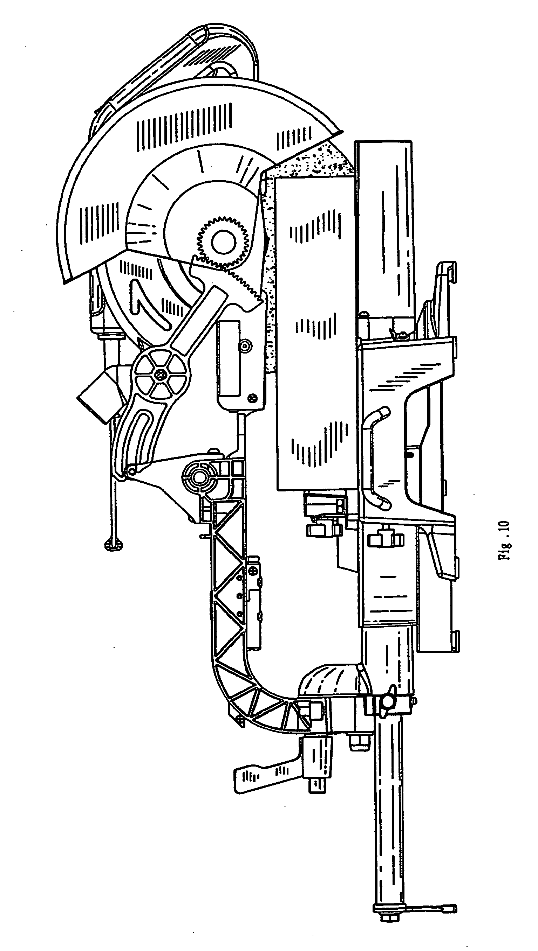

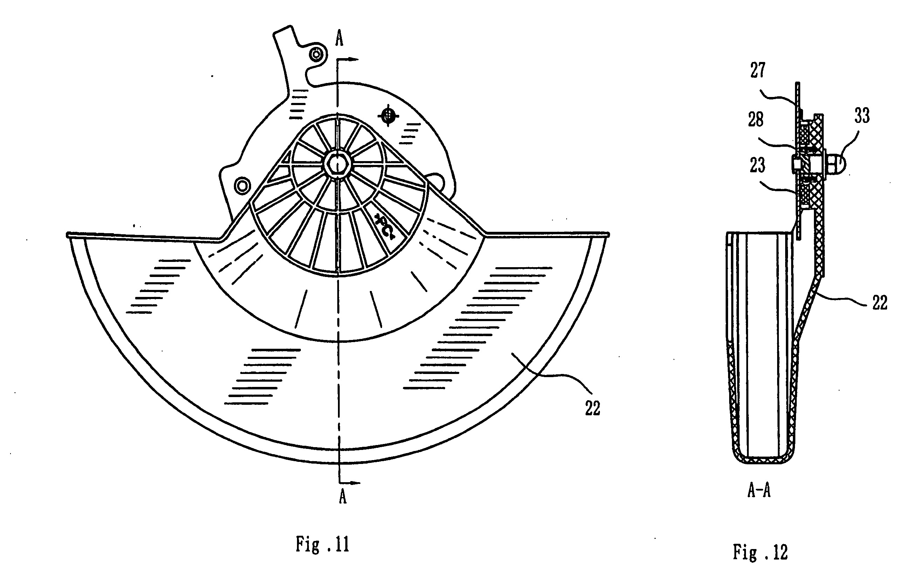

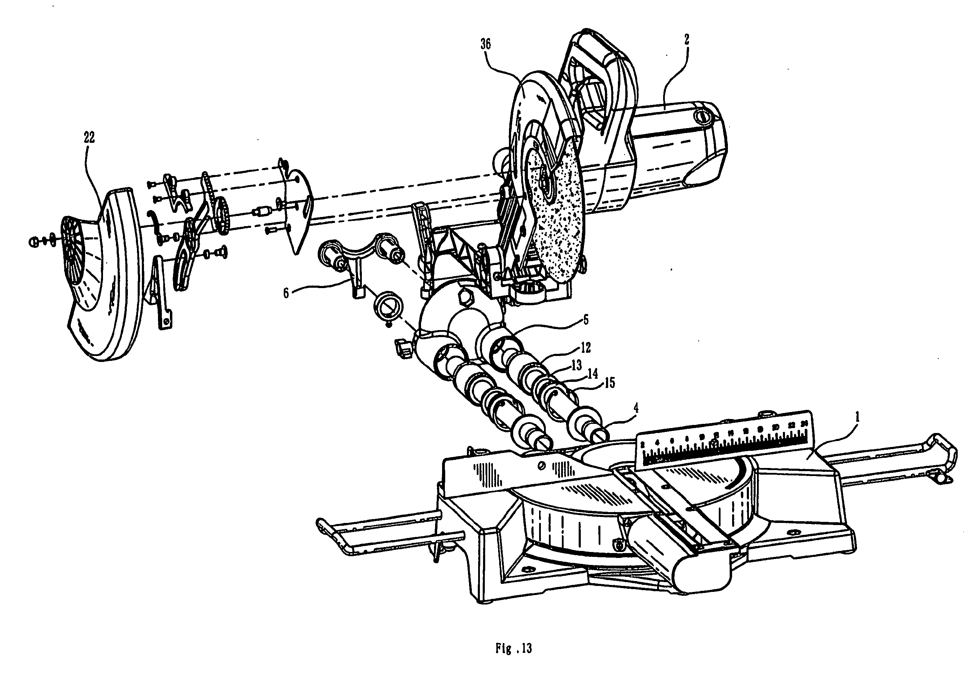

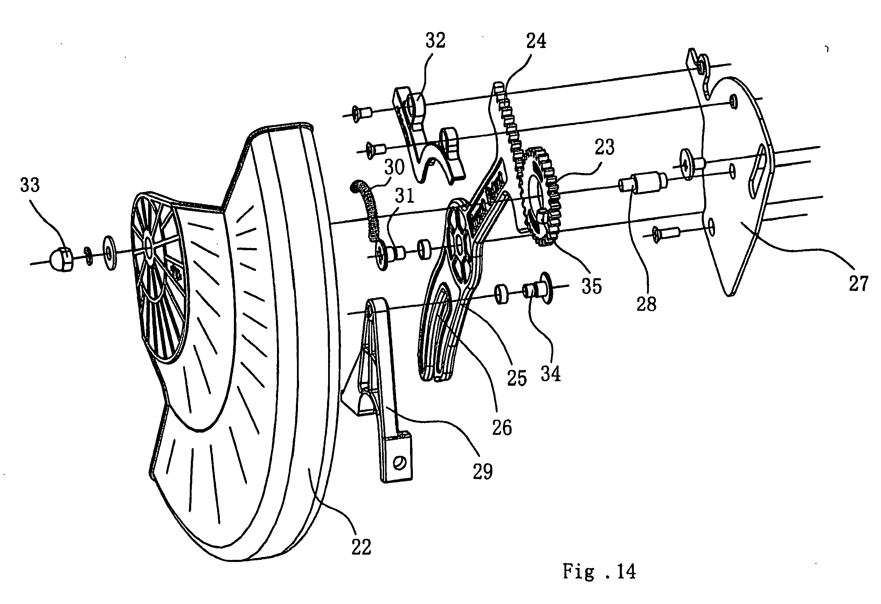

As shown in figures 5, 6, 7, 8, 9, 10, 11, 12, 13 and 14, the flexible blade guard on this electric miter saw includes main components such as a fixed blade guard 36 mounted on the cutting member, a flexible blade guard 22, a tension rod 25, gear 23, a spring 30 and a fixing panel 27. Please refer to figures 13 and 14. The fixed blade guard 36 is connected to the link arm 3 on the miter saw by a rotating shaft. The lower end of the link arm 3 is connected to the slide rod on the base and secured. The flexible blade guard 22 joins relatively the fixed blade guard 36 from the bottom and is rotatably connected to the fixed blade guard. What embodies the invention is the flexible blade guard 22. The gear 23 is housed on the rotation portion of the flexible blade guard 22, shown as figure 14 and 12. The flexible blade guard can be rotatably connected and fixed on the fixing panel 27 by an embedding member 28 and a loosening-proof nut 33 and a spacer, and the fixing panel is secured on the fixed blade guard 36 by a raming member like a threaded bolt, shown as figure 11 and 12. In the meantime, there is a concavo-convex localization mechanism that supports each other between the flexible blade guard 22's connecting position and the gear 23. The concavo-convex location mechanism is a ring segment 35 that is distributed circularly, shown as in figure 14. There are connection apertures between the gear 23 and the fixing panel 27 for an ease reposition of the flexible blade guard. Between the apertures are reposition springs 30. The rotatable tension rod 25 is connected and secured on the side portion of the fixed blade guard 22, the upper portion of which is formed as a rack 24. The better design is to design the rack 24 to an arc one. The rack 24 engages the gear 23. There is a ringent slot 26 at the lower end of the tension rod, the bottom of which is arc one. The ringent slot is connected to a location pin 34, as shown in figure 6. In the example, the fixed threaded bolt is used as the location pin 34. A rolling sheath is housed on the bolt to reduce the friction caused by the threaded bolt and the ringent slot at the lower end of the tension rod, and then secure the threaded bolt on a fixing member 29, secure the fixing member on the link arm 3, an exploded configuration refers to figure 14. To prevent the rack from falling off the gear while being used, the teeth at the most upper portion of the gear 24 is made into the blocking ones that supports the gear and limits position. The teeth can prevent efficiently the rack from falling off when the rack is in the ultimate position. On the rack 24 there is a protection sheath 32, which is secured on the fixing panel 27 to provide necessary protection. The flexible blade guard 22 is a transparent one so that the saw inside can be observed conveniently. The operating principle and process of the blade guards embodied in the invention is that: when usually in non-operation status, the flexible blade guard 22 moves back to its original position under the elasticity of the spring 30 for the guard 22 to be in the close status and locked, as shown in figure 5 and 6. When the saw is used to cut materials, the guard will be unlocked manually and the cutting member 2 be lowered for the cutting member to rotate downward. The fixed blade guard 36 on the cutting member will rotate downward, too. Because the tension rod 25 is rotatably secured on the fixed blade guard 36, the ringent slot 26 beneath the lower end supports the location pin 34 on the link arm. So, the tension rod can rotate clockwise against the connecting point of the fixed blade guard. With the engagement between the rack 24 on the upper end of the tension rod and the gear 23, the clockwise rotation of the tension rod drives the guard 22 to rotate counter-clockwise and open gradually, as shown in figure 7 and 8, untill the cutting member 2 of the saw is lowered to its position and the guard 22 opened completely while the spring 30 rolls in for storage of energy, as shown in figure 9 and 10. When materials cutting is not needed, loosen your hand and the energy will be released under the elasticity of the spring 30 to drive the gear 23 to rotate counter-clockwise and force the flexible blade guard 22 to return to its original position untill it is closed. And the fixed blade guard and the cutting member will return to their original position, for the gear 23 engages the rack 24 on the tension rod, as shown in figure 5 and 6. When the flexible blade guard cannot open and close to its position due to errors in the processing and installation of the components of the control mechanism, such as the gear 23, the rack 24 and the tension rod 25, what is needed to do is only adjust the initial engage position of the rack 24 and the gear 23 to eliminate these deviations. Therefore, the flexible blade guard can meet the requirement of being opened and closed to their positions.

## Claims

1. An electric miter saw includes a base, a cutting table (1), a cutting member (2) and a link arm (3);the cutting table(1) is mounted on the base.; the upper portion of the link arm (3) is connected to said cutting member (2) with the cutting saw blade rotating driven by an electric motor, the lower portion of the link arm (3) is connected to the upper portion of a supporting member (5) and secured by a threaded central bolt (11); a linear ball bearing (12) is mounted in the inner aperture of the supporting member (5), which can be slidably connected to a slide rod (4) via the linear ball bearing (12); at the outer end of the slide rod (4) a position limit socket (6) is mounted, the character of which is that the inner end of the slide rod (4) is connected and secured beneath the cutting table (1) via a dischargeable fix mechanism
**characterized in that**
a flexible blade guard (22) is attached to the cutting member (2), which includes a fixed blade guard (36) fixed on the cutting member (2) and a flexible one; the flexible blade guard (22) joins relatively the fixed one from the bottom and is rotatably connected and secured on the fixed one; at the rotatable connecting portion there is a gear (23), and at the side portion of the fixed blade guard (36) there is a rotatable tension rod (25), at the upper end of which a rack (24) is formed, which engages the gear (23); at the lower end of the tension rod (25) there is a ringent slot (26), which is inserted into a localization pin on the link arm (3).

2. An electric miter saw as set forth in claim 1 has the character that the rack (24) mentioned above is an arc one.

3. An electric miter saw as set forth in claim 1 or 2 has the character that teeth at the most upper portion are made as the blocking ones that support the gear (23) and limit positions.

4. An electric miter saw as set forth in anyone of the claims 1 to 3 has the character that the bottom of the ringent slot (26) is in the shape of arc.

5. An electric miter saw as set forth in anyone of the claims 1 to 4 has the character that the gear (23) is connected to the inner side of the flexible blade guard's (22) connecting portion, which is connected and secured to a fixing panel (27) by an embedding member (28), a loosening-proof nut (33) and a spacer; the fixing panel (27) is secured on the fixed blade guard (36) by a fastening member.

6. An electric miter saw as set forth in anyone of the claims 1 to 5 has the character that between the connecting portion of the flexible blade guard (22) and the interface of the gear (23) is there a concavo-convex fixing mechanism, which is a ring segment that is distributed circularly.

7. An electric miter saw as set forth in anyone of the claims 1 to 6 has the character that a reposition spring (30) connects the gear (23) to the fixing panel (27).

8. An electric miter saw as set forth in anyone of the claims 1 to 7 has the character that the flexible blade guard (22) mentioned above is a transparent one.

9. An electric miter saw as set forth in anyone of the claims 1 to 8 has the character that the fixing panel (27) mentioned above is connected and secured on a protecting sheath (32) which covers the racks (24).

## Patentansprüche

1. Elektrische Gehrungssäge beinhaltend eine Basis, einen Schneidtisch (1), ein Schneidglied (2) und einen Verbindungsarm (3); der Schneidtisch (1) ist auf der Basis angebracht; der obere Teil des Verbindungsarms (3) ist mit dem Schneidglied (2) verbunden, wobei das Schneidsägenblatt durch einen Elektromotor drehangetrieben wird, der untere Teil des Verbindungsarms (3) ist durch einen mittleren Gewindebolzen (11) mit dem oberen Teil eines Stützglieds (5) verbunden; ein Linearkugellager (12) ist in der inneren Öffnung des Stützglieds (5) angebracht, das über das Linearkugellager (12) verschiebbar mit einer Gleitstange (4) verbunden sein kann; am äußeren Ende der Gleitstange (4) ist eine Positionsbegrenzungsbuchse (6) angebracht, die so beschaffen ist, dass das innere Ende der Gleitstange (4) über einen demontierbaren Befestigungsmechanismus unter dem Schneidtisch (1) verbunden und befestigt ist, **dadurch gekennzeichnet, dass**
ein flexibler Blattschutz (22) am Schneidglied (2) befestigt ist, der einen am Schneidglied (2) festgelegten Blattschutz (36) und einen flexiblen enthält; der flexible Blattschutz (22) ist relativ mit dem Festgelegten von unten verbunden und drehbar verbunden und am Festgelegten befestigt; ein Zahnrad (23) ist am drehbaren Verbindungsteil vorgesehen und am Seitenteil des festgelegten Blattschutzes (36) ist eine drehbare Zugstange (25) vorgesehen, an deren oberen Ende eine Zahnstange (24) ausgebildet ist, die das Zahnrad (23) in Eingriff nimmt; am unteren Ende der Zugstange (25) ist ein aufklaffender Schlitz (26) vorgesehen, der in einen Positionierstift am Verbindungsarm (3) eingeführt wird.

2. Elektrische Gehrungssäge nach Anspruch 1, die so beschaffen ist, dass die oben genannte Zahnstange (24) bogenförmig ist.

3. Elektrische Gehrungssäge nach Anspruch 1 oder 2, die so beschaffen ist, dass Zähne am obersten Teil als Sperrzähne ausgeführt sind, die das Zahnrad (23) stützen und Positionen begrenzen.

4. Elektrische Gehrungssäge nach einem der Ansprüche 1 bis 3, die so beschaffen ist, dass der Grund des aufklaffenden Schlitzes (26) bogenförmig ist.

5. Elektrische Gehrungssäge nach einem der Ansprüche 1 bis 4, die so beschaffen ist, dass das Zahnrad (23) mit der Innenseite des Verbindungsteils des flexiblen Blattschutzes (22) verbunden ist, der durch ein Einbettungsglied (28), eine gegen Lösen gesicherte Mutter (33) und ein Abstandsstück mit einer Befestigungsplatte (27) verbunden und daran befestigt ist; die Befestigungsplatte (27) ist durch ein Befestigungsglied am festgelegten Blattschutz (36) befestigt.

6. Elektrische Gehrungssäge nach einem der Ansprüche 1 bis 5, die so beschaffen ist, dass zwischen dem Verbindungsbereich bzw. -abschnitt des flexiblen Blattschutzes (22) und der Grenzfläche des Zahnrads (23) ein konkavkonvexer-Befestigungsmechanismus vorgesehen ist, bei dem es sich um ein kreisförmig verteiltes Ringsegment handelt.

7. Elektrische Gehrungssäge nach einem der Ansprüche 1 bis 6, die so beschaffen ist, dass eine Neupositionierfeder (30) das Zahnrad (23) mit der Befestigungsplatte (27) verbindet.

8. Elektrische Gehrungssäge nach einem der Ansprüche 1 bis 7, die so beschaffen ist, dass der oben genannte flexible Blattschutz (22) durchsichtig ist.

9. Elektrische Gehrungssäge nach einem der Ansprüche 1 bis 8, die so beschaffen ist, dass die oben erwähnte Befestigungsplatte (27) mit einer die Zahnstangen (24) bedeckenden Schutzhülle (32) verbunden und daran befestigt ist.

## Revendications

1. Scie électrique à onglets comprenant une base, une table de coupe (1), un élément de coupe (2) et un bras de liaison (3) ; la table de coupe (1) est montée sur la base ; la partie supérieure du bras de liaison (3) est reliée au dit élément de coupe (2) et la lame de coupe de la scie est entraînée en rotation par un moteur électrique ; la partie inférieure du bras de liaison (3) est reliée à la partie supérieure d'un élément de support (5) auquel elle est fixée par une vis centrale (11) ; un palier linéaire à billes (12) est monté dans l'alésage intérieur de l'élément de support (5) qui peut être connecté de façon coulissante à une tige de glissière (4) via le palier linéaire à billes (12) ; une douille de limite de position (6) est montée à l'extrémité extérieure de la tige de glissière (4), et l'extrémité intérieure de la tige de glissière (4) est montée et fixée sous la table de coupe (1) par un mécanisme de fixation démontable ;
**caractérisée en ce que**
une protection de lame flexible (22) est attachée à l'élément de coupe (2) et elle comprend une protection de lame fixe (36) fixée sur l'élément de coupe (2) et une protection de lame flexible ; la protection de lame flexible (22) se raccorde à la protection fixe à la partie basse et elle est fixée de façon pivotante et tenue sur la protection fixe ; un pignon (23) est prévu sur la partie de fixation pivotante, et un balancier pivotant (25) est prévu sur la partie latérale de la protection de lame fixe (36) et comporte une crémaillère (24) à son extrémité supérieure, qui engrène avec le pignon (23) ; et, à l'extrémité inférieure du balancier (25), est formée une rainure ouverte (26) dans laquelle est inséré un ergot de positionnement prévu sur le bras de liaison (3).

2. Scie électrique à onglets selon la revendication 1, **caractérisée en ce que** la crémaillère (24) précitée est une crémaillère de forme arquée.

3. Scie électrique à onglets selon la revendication 1 ou 2, **caractérisée en ce que** les dents de la partie la plus haute sont sous la forme de dents de blocage qui supportent le pignon (23) et limitent ses positions.

4. Scie électrique à onglets selon une quelconque des revendications 1 à 3, **caractérisée en ce que** la partie inférieure de la rainure (26) est en forme d'arc.

5. Scie électrique à onglets selon une quelconque des revendications 1 à 4, **caractérisée en ce que** le pignon (23) est relié au côté intérieur de la partie de connexion de la protection de lame flexible (22), qui est reliée et fixée à une plaque de fixation (27) par une pièce d'encastrement (28), un écrou indesserrable (33) et une entretoise ; et la plaque de fixation (27) est montée sur la protection de lame fixe (36) par un élément d'attache.

6. Scie électrique à onglets selon la revendication 1, **caractérisée en ce que**, entre la partie de connexion de la protection de lame flexible (22) et l'interface du pignon (23), il y a un mécanisme de fixation concave - convexe qui est un segment annulaire réparti circulairement.

7. Scie électrique à onglets selon une quelconque des revendications 1 à 6, **caractérisée en ce qu'**un ressort de rappel (30) relie le pignon (23) à la plaque de fixation (27).

8. Scie électrique à onglets selon une quelconque des revendications 1 à 7, **caractérisée en ce que** la protection de lame flexible (22) précitée est une protection transparente.

9. Scie électrique à onglets selon une quelconque des revendications 1 à 8, **caractérisée en ce que** la plaque de fixation (27) précitée est reliée et fixée à un capot de protection (32) qui couvre la crémaillère (24).
